# EUROPÄISCHE PATENTANMELDUNG

(11) **EP 0 921 508 A2**
(43) Veröffentlichungstag der Anmeldung: **09.06.1999**
(21) Anmeldenummer: 98122298.7
(22) Anmeldetag: 24.11.1998
(51) Int. Cl.: G08C 23/02, G08C 23/04, H04M 11/00, G10L 7/08, H04N 7/14

(54) **Gerätekombination aus Fernseh- und Rechnerteil mit Zugriff zu einem Kommunikationsnetz sowie Fernbedienung dafür**

(30) Priorität: 08.12.1997 DE 19754382
(71) Anmelder: PCS PC-Systeme Entwicklungs- und Produktionsgesellschaft mbH & Co. KG, 86199 Augsburg (DE)
(72) Erfinder: Nasko, Horst, 80638 München (DE)
(74) Vertreter: Epping, Wilhelm, Dr.-Ing.

(57) **Zusammenfassung**

Die Fernbedienung (FB) weist ein Mikrofon (M) auf, von dem aus Sprachinformationen zur Steuerung der Gerätekombination (GK) und zur Inanspruchnahme von Online-Diensten unter Ausnutzung der vorhandenen drahtlosen Übertragungseinrichtungen (W/S,E/AW) als solche ohne Auswertung des Informationsinhaltes übertragen und erst von einer zur Gerätekombination (GK) gehörenden Spracherkennungseinrichtung (SER) ausgewertet werden.

## Beschreibung

Die Erfindung betrifft eine Gerätekombination aus Fernseh- und Rechnerteil mit Zugriff zu einem Kommunikationsnetz sowie eine Fernbedienung dafür.

Aus Fernseh- und Rechnerteil bestehende Gerätekombinationen werden vielfach als Multimediageräte bezeichnet. Als Fernsehteil kann dabei auch der Monitor des Rechners verwendet werden, dem die Fernsehsignale als VAG-Signale zugeführt werden. Weitere Bestandteile solcher Geräte sind in der Regel noch verschiedene CD-Laufwerke für Audio- und Video-CD sowie ein Telekommunikationsteil mit Anschluß an das Telefonnetz. Ein derartiges Multimediagerät ist z.B. in der US-Patentschrift 5 283 819 beschrieben. Dieses Gerät ist außerdem mit einer Fernbedienung versehen, die mit Infrarotstrahlen arbeitet und die Auswahl der verschiedenen Betriebsarten sowie die Steuerung in der jeweils ausgewählten Betriebsart ermöglicht.

Hiervon ausgehend bezweckt die Erfindung eine vorteilhafte Weiterbildung in der Weise, daß bei Zugriffen über den Telekommunikationsteil des Gerätes mögliche Online-Dienste ebenfalls in einfacher Weise gesteuert werden können.

Dies wird durch die kennzeichnenden Merkmale des Anspruches 1 bzw. 2 erreicht. Die Erfindung ermöglicht damit zusätzlich eine Steuerung durch Sprachinformationen, die von einem Mikrofon der Fernbedienung aufgenommen werden.

Fernsteuerungen mit integrierter Sprachsteuerung sind bereits bekannt, man siehe z.B. die britische Patentanmeldung 2 220 290. Derartige Sprachsteuerungen erfordern abhängig vom jeweiligen Steuerungsumfang einen sehr unterschiedlichen Aufwand. Will man nur Tastenfunktionen einer üblichen Fernbedienung für Fernsehgeräte und /oder Videorecorder durch die Sprache nachbilden, dann kann die Spracherkennung in die Fernbedienung integriert sein, da nur ein relativ kleiner Wortschatz zu bewältigen ist. Für die Inanspruchnahme von Online-Diensten reicht ein derartig geringer Wortschatz nicht aus. Es ist vielmehr ein umfangreiches Vokabular zu bewältigen, wobei neben Einzelwörtern auch Fließtext sprecherunabhängig zu verarbeiten ist. Das aber erfordert Hochleistungsprozessoren und -speicher in Verbindung mit einer ausreichenden Stromversorgung, die in einer üblichen Fernbedienung nicht untergebracht werden können.

Bei der Erfindung wird daher das Mikrofon von der Spracherkennungseinrichtung getrennt und letztere nicht in der Fernbedienung untergebracht, sondern der Gerätekombination zugeordnet. Es werden daher die vom Mikrofon aufgenommenen Sprachinformationen ohne Auswertung ihres Informationsinhaltes unmittelbar zur Steuerung der Gerätekombination übertragen. Die Übertragung kann analog oder digitalisiert in bekannter Weise mit Infrarotstrahlen oder Ultraschall erfolgen.

Das Mikrofon wird zweckmäßig durch eine gesonderte Taste wirksam geschaltet, um Fehlsteuerungen durch Nebengeräusche oder eine nebenbei laufende Unterhaltung auszuschalten Dabei ist es weiterhin vorteilhaft, wenn eine optische Anzeige erkennen läßt, daß das Mikrofon eingeschaltet ist. Auch kann der mit der gesonderten Taste gekoppelte Schalter bistabil ausgebildet sein, damit eine kurze Tastenbetätigung genügt, um das Mikrofon ein- oder wieder auszuschalten. Der Schalter kann außerdem als Umschalter ausgebildet sein, der die Sendeeinrichtung der Fernbedienung wahlweise mit den übrigen Steuertasten oder mit dem Mikrofon verbindet.

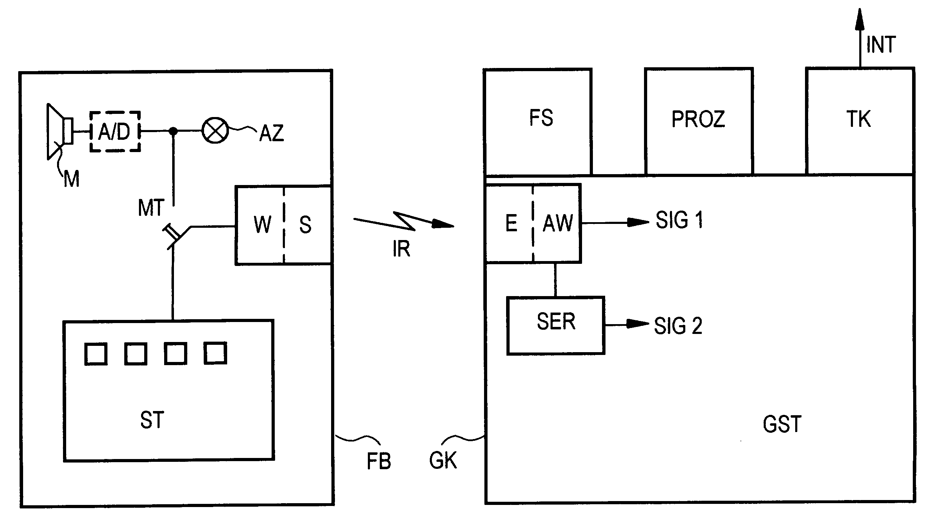

Einzelheiten der Erfindung seien nachfolgend an Hand eines in der Zeichnung dargestellten Ausführungsbeispieles näher erläutert.
Die einzige Figur zeigt im linken Teil eine Fernbedienung FB und im rechten Teil die Gerätekombination GK in schematischer Darstellung.

Neben den üblichen Steuertasten ST ist die Fernbedienung FB mit einem Mikrofon M ausgerüstet. Die Steuertasten ST und das Mikrofon M können, wie gezeigt, durch die gesonderte Taste MT wahlweise an einen Wandler W mit nachgeschalteter Sendeeinrichtung S für eine drahtlose Übertragung zur Gerätekombination GK angeschaltet werden.

Bei einer anderen Ausführungsform können die Steuertasten ST auch ständig mit dem Wandler W verbunden sein, während das Mikrofon M nur bei Bedarf durch die gesonderte Taste MT zugeschaltet wird.

Die Steuertaste MT ist zweckmäßig mit einem bistabilen Schalter gekoppelt, so daß die Steuertaste für die Mikrofoneingabe nicht ständig betätigt zu halten ist. Eine mit Betätigung der gesonderten Steuertaste MT einschaltbare optische Anzeige AZ, z.B. in Form einer Leuchtdiode, kennzeichnet das Mikrofon M als wirksam geschaltet.

Dem Mikrofon M kann gegebenenfalls ein Analog-/Digitalwandler A/D nachgeschaltet sein, was gestrichelt angedeutet ist. Die vom Mikrofon M ausgehenden Sprachsignale werden wie die von den Steuertasten ST ausgehenden Steuersignale unmittelbar ohne Ermittlung der Informationsinhalte weitergeleitet, so daß der Aufwand für die Fernbedienung FB gering gehalten werden kann. Zur Übertragung können in bekannter Weise Infrarotstrahlen IR oder auch Ultraschall verwendet werden.

Die Gerätekombination GK besteht z.B. aus einem Fernsehteil FS, einem Rechnerteil PROZ und einem Telekommunikationsteil TK sowie einer gemeinsamen Steuerung GST. In dieser gemeinsamen Steuerung GST werden werden die von der Fernbedienung FB kommenden Steuersignale IR von einem Empfänger E mit nachgeschalteter Auswerteeinrichtung AW aufgenommen und ausgewertet. Handelt es sich dabei um Steuersignale der Steuertasten ST, dann werden diese als Steuersignale SIG1 unmittelbar an die Steuerung GST zur Ausführung der entsprechenden Steuerfunktion übergeben. Handelt es sich dagegen um Sprachsignale vom Mikrofon M der Fernbedienung FB, dann werden diese an eine Spracherkennungseinrichtung SER weitergeleitet und in Steuersignale bzw. -anweisungen SIG2 umgesetzt, die abhängig vom jeweiligen Betriebsmodus von der gemeinsamen Steuerung GST direkt ausgeführt und/oder über das durch den Telekommunikationsteil TK erreichbare Kommunikationsnetz INT, z.B. das öffentliche Telefonnetz, weitergeleitet werden.

Über das Kommunikationsnetz INT können dann in gewohnter Weise Online-Dienste in Anspruch genommen werden, wobei die Steuerung allein von der Fernbedienung FB aus durchführbar ist. Damit verbundene Rückmeldungen aus dem Netz INT können z.B. über den Lautsprecher und/oder auf dem Bildschirm des Fernsehteils FS zur Kenntnis genommmen werden.

## Patentansprüche

1. Gerätekombination aus Fernseh- und Rechnerteil mit Zugriff zu einem Kommunikationsnetz und Fernbedienung, **dadurch gekennzeichnet,** daß die Fernbedienung (FB) ein Mikrofon (M) aufweist, über das Sprachinformationen zur Steuerung der Gerätekombination (GK) aufgenommen und unmittelbar ohne Auswertung des Informationsinhaltes an eine Spracherkennungseinrichtung (SER) der Gerätekombination (GK) übertragen werden.

2. Fernbedienung für eine Gerätekombination aus Fernseh- und Rechnerteil mit Zugriff zu einem Kommunikationsnetz, **dadurch gekennzeichnet,** daß die Fernbedienung (FB) ein Mikrofon (M) aufweist und daß über das Mikrofon (M) zwecks Steuerung der Gerätekombination (GK) aufgenommene Sprachinformationen als solche ohne Auswertung des Informationsinhaltes an die Sendeeinrichtung (W/S) der Fernbedienung (FB) weitergeleitet und ausgesendet werden.

3. Gerät nach Anspruch 1 oder 2, **dadurch gekennzeichnet,** daß dem Mikrofon (M) ein Analog-/Digitalwandler (A/D) nachgeschaltet ist und daß die vom Mikrofon (M) aufgenommenen Sprachinformationen digitalisiert übertragen werden.

4. Gerät nach einem der Ansprüche 1 bis 3, **dadurch gekennzeichnet,** daß das Mikrofon (M) durch eine gesonderte Taste (MT) der Fernbedienung (FB) wirksam schaltbar ist.

5. Gerät nach Anspruch 4, **dadurch gekennzeichnet,** daß eine optische Anzeige (AZ) das Wirksamschalten des Mikrofon (M) kennzeichnet.

6. Gerät nach Anspruch 4 oder 5, **dadurch gekennzeichnet,** daß die gesonderte Taste (MT) mit einem Umschalter gekoppelt ist, der die Sendeeinrichtung (W/S) der Fernbedienung (FB) wahlweise mit den übrigen Steuertasten (ST) der Fernbedienung oder mit dem Mikrofon (M) verbindet.

7. Gerät nach einem der Ansprüche 4 bis 6, **dadurch gekennzeichnet,** daß der mit der gesonderten Taste (MT) gekoppelte Schalter bistabil ausgebildet ist.
